# EUROPEAN PATENT SPECIFICATION

(11) **EP 4 054 839 B1**
(45) Date of publication and mention of the grant of the patent: **17.01.2024**
(21) Application number: 20816040.8
(22) Date of filing: 04.11.2020
(51) Int. Cl.: B32B 7/12, B32B 25/16, B32B 27/18, B32B 27/28, B32B 27/30, B32B 27/32, B32B 27/34, B32B 27/36, B32B 27/40

(54) **ANTIMICROBIAL MULTILAYER FILM**
ANTIMIKROBIELLE MEHRSCHICHTFOLIE
FILM MULTICOUCHE ANTIMICROBIEN

(30) Priority: 06.11.2019 US 201962931368 P
(43) Date of publication of application: 14.09.2022
(73) Proprietor: Cryovac, LLC, Charlotte, NC 28208 (US)
(72) Inventor: EBNER, Cynthia Louise, Charlotte, NC 28278 (US)
(74) Representative: Uexküll & Stolberg
(86) International application number: PCT/US2020/058865
(87) International publication number: WO 2021/092003

(56) References cited:
- WO-A2-2011/129982
- CN-A- 105 860 226
- US-A1- 2006 246 242

## Description

### BACKGROUND

The subject matter disclosed herein relates to multilayer films used for packaging. More particularly, the subject matter disclosed herein relates to multilayer films having an antimicrobial agent.

During processing, preparation, and packaging, food products can encounter microorganisms that make the food unsuitable for consumption. The microorganisms can originate from the food itself, the food contact surfaces, and the surrounding environment. The reduction of microorganisms can extend the shelf life of food products.

Including antimicrobial agents directly in or on the food is usually not acceptable to consumers, as they prefer natural foods and food components. Such additives can also accumulate above safe levels and affect color, flavor and smell of the food product. Effectively incorporating antimicrobial agents into or onto packaging material can also be difficult. Antimicrobial agents are commonly rendered ineffective as a result of the high processing temperatures used to process typical packaging films or structures. In addition, antimicrobial agents can become immobilized within the polymer network of a film layer, reducing availability on the film surface.

The discussion above is merely provided for general background information and is not intended to be used as an aid in determining the scope of the claimed subject matter. US 2006/246242 A1 discloses a multilayer film for use as food package comprising a sealant layer comprising a component selected from ethylene/alpha-olefin copolymer, nylon blends or ionomer. Processing aids like slip agent, e.g. erucamides may also be used. Furthermore, usual additives may be used in any layer, inter alia an antimicrobial agent.

CN 105 860 226 A discloses an antistatic antibacterial film comprising several kinds of additives, e.g. erucyl amide and a "complex antimicrobial".

WO 2011/129982 A2 discloses multilayer films comprising antimicrobial agents.

### BRIEF DESCRIPTION

A multilayer film containing up to 15 wt% of a blend of cis-13-docosenamide and at least one primary antimicrobial material on or in an exterior layer of the film. The blend of cis-13-docosenamide and at least one primary antimicrobial material is either extruded as part of the surface layer of the film or coated onto the surface of the film.

An advantage that may be realized in the practice of some disclosed embodiments of the multilayer film, packaging material, and method of manufacture is to control microbial contamination. The multilayer film, packaging material and method of manufacture may reduce bacteria in food applications thereby prolonging shelf life and protecting food from spoilage. The antimicrobial blend is compatible with the temperatures and shear forces used in the extrusion process.

According to the invention, a multilayer film is disclosed. The multilayer film comprises a sealant layer, the sealant layer comprising: a component selected from ethylene/alpha-olefin copolymer, olefin homopolymer, polyamide, polyester, ethylene/unsaturated ester copolymer, ionomer resin, and blends thereof; and not more than 15 wt% of an antimicrobial blend; the antimicrobial blend comprising cis-13-docosenamide and at least one primary antimicrobial material.

In another exemplary embodiment, a food package is disclosed. The food package comprises a food product; a multilayer film comprising a sealant layer, the sealant layer comprising: a component selected from ethylene/alpha-olefin copolymer, olefin homopolymer, polyamide, polyester, ethylene/unsaturated ester copolymer, ionomer resin, and blends thereof; and not more than 15 wt% of an antimicrobial blend; the antimicrobial blend comprising cis-13-docosenamide and at least one primary antimicrobial material.

In another exemplary embodiment, a method of making a multilayer film is disclosed. The method comprises the steps of providing a component selected from ethylene/alpha-olefin copolymer, olefin homopolymer, polyamide, polyester, ethylene/unsaturated ester copolymer, ionomer resin, and blends thereof; mixing the component with an antimicrobial blend to create a mixture; extruding the mixture through a die to form a multilayer film; wherein an outer layer of the multilayer film comprises the antimicrobial blend, the antimicrobial blend comprises cis-13-docosenamide and at least one primary antimicrobial material polymeric substrate in an amount of not more than 15 wt% of the exterior layer of the multilayer film.

In another exemplary embodiment, a method of making a multilayer film is disclosed. The method comprises the steps of providing a multilayer film; coating an exterior layer of the multilayer film with an antimicrobial blend; curing the coating; wherein the antimicrobial blend comprises cis-13-docosenamide and at least one primary antimicrobial material polymeric substrate in an amount of not more than 15 wt% of the exterior layer of the multilayer film.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description.

### DETAILED DESCRIPTION

In embodiments an antimicrobial blend is incorporated into a layer of a multilayer film via extrusion into a layer of the multilayer film. The antimicrobial blend may be incorporated via extrusion into the sealant layer of the disclosed packaging materials. Such packaging materials are suitable for use in the packaging of food products to control microbial contamination. In another embodiment, an antimicrobial blend is coated onto an outer layer of a multilayer film.

As used herein, the term "film" can include, but is not limited to, a laminate, sheet, web, coating, and/or the like, that can be used to package a product. The film can be a rigid, semi-rigid, or flexible product. A multilayer film is a thermoplastic film having one or more layers formed from polymeric or other materials that are bonded together by any conventional or suitable method, including, but not limited to: coextrusion, extrusion coating, lamination, vapor deposition coating, solvent coating, emulsion coating, or suspension coating. Extrusion is the process of forming continuous shapes by forcing a molten plastic material through a die, followed by cooling or chemical hardening. Immediately prior to extrusion through the die, the polymeric material is fed into a rotating screw of variable pitch, i.e., an extruder that forces the polymeric material through the die. Coextrusion refers to the process of extruding two or more materials through a single die with two or more orifices arranged so that the extrudates merge and weld together into a laminar structure before chilling, i.e., quenching. Coextrusion can be employed in film blowing, free film extrusion, and extrusion coating processes.

A layer may be an "interior layer" of a film if the layer has both surfaces directly adhered to other layers of the film. A layer may be an "outer layer" of a film if the layer forms an outer surface of the film. An "outside layer" is the outer layer of a film that is or is intended to be adjacent the space outside of a package comprising the film. An "inside layer" of a film is the outer layer of the film that is or is intended to be adjacent the space inside of a package comprising the film. A sealant layer is an outer layer of a film that is adapted to facilitate the heat-sealing of the film to itself or to another object, such as another film.

The multilayer film can be monolayer or multilayer. In an embodiment, the multilayer film is asymmetrical. To this end, the multilayer film can comprise 1 to 20 layers; in some embodiments, from 2 to 12 layers; in some embodiments, from 2 to 9 layers; and in some embodiments, from 3 to 8 layers. Thus, in some embodiments, the multilayer film can have 1, 2, 3, 4, 5, 6, 7, 8, 9, 10, 11, 12, 13, 14, 15, 16, 17, 18, 19, or 20 layers. In an embodiment, the multilayer film utilizes microlayers. A microlayer section may include between 10 and 1,000 microlayers in each microlayer section.

The multilayer film may have any total thickness as long as the film provides the desired properties for the particular packaging operation in which it is to be used. Nevertheless, in some embodiments the multilayer film has a total thickness ranging from about 2.54 µm (0.1 mil) to about 381 µm (15 mils); in some embodiments, from about 5.08 µm (0.2 mil) to about 254 µm (10 mils); in some embodiments, from about 7.62 µm (0.3 mils) to about 127 µm (5.0 mils); in some embodiments, from about (10.16 µm) 0.4 mils to about 101.6 µm (4.0 mils); and in some embodiments, from about 12.7 µm (0.5 mils) to about 76.2 µm (3.0 mils). In an embodiment, the multilayer film has a total thickness of not more than 304.8 µm, 254 µm, 203.2 µm, 152.4 µm, 101.6 µm, 38.1 µm or 25.4 µm (12, 10, 8, 6, 4, 1.5 or 1 mils). In an embodiment, each layer of the multilayer film may independently have any of at least, and/or at most, the following thicknesses: 6.35 µm, 12.7 µm, 25.4 µm, 38.1 µm, 50.8 µm, 63.5 µm, 76.2 µm, 101.6 µm, 127 µm, 177.8 µm, 203.2 µm and 254 µm (0.25, 0.5, 1, 1.5, 2, 2.5, 3, 4, 5, 7, 8, and 10 mils).

All compositional percentages used herein are presented on a "by weight" basis, unless designated otherwise.

As used herein, the phrases "seal layer," "sealing layer," "heat seal layer," and "sealant layer," refer to an outer film layer, or layers, involved in heat sealing the film to itself, another film layer of the same or another film, and/or another article which is not a film. Heat sealing can be performed in any one or more of a wide variety of manners, such as melt-bead sealing, thermal sealing, impulse sealing, ultrasonic sealing, hot air sealing, hot wire sealing, infrared radiation sealing, ultraviolet radiation sealing, electron beam sealing, and the like.

According to the invention, the sealant layer of the multilayer film comprises an antimicrobial blend. In an embodiment the antimicrobial blend includes i) an antimicrobial salt selected from the group consisting of sodium acetate, sodium L-lactate, sodium diacetate, lactic acid on calcium L-lactate carrier and blends thereof and ii) cis-13-docosenamide. Cis-13-docosenamide is not an antimicrobial agent, but instead, improves the antimicrobial effect of other antimicrobial agents. The antimicrobial blend is present in the sealant layer in amount that is not more than 15 wt% as compared to the sealant layer. In another embodiment, the antimicrobial blend is coated onto the sealant layer in amount that is not more than 15 wt% as compared to the sealant layer. In some embodiments, the antimicrobial blend further includes lauryl arginine esters with rosemary extracts, citrus extracts and blends thereof.

The combination of an antimicrobial salt and cis-13-docosenamide allows the multilayer film to have an improved antimicrobial effect. The multilayer film being able to destroy or inhibit the growth of microorganisms. In an embodiment the antimicrobial blend is present in the sealant layer in amount that is not more than 15 wt% as compared to the sealant layer. In another embodiment the antimicrobial blend is present in the sealant layer in amount that is not more than 10 wt% as compared to the sealant layer. In another embodiment the antimicrobial blend is present in the sealant layer in amount between 1 and 15 wt% as compared to the sealant layer. In another embodiment the antimicrobial blend is present in the sealant layer in amount between 2 and 13 wt% as compared to the sealant layer. In another embodiment the antimicrobial blend is present in the sealant layer in amount between 3 and 10 wt% as compared to the sealant layer.

In embodiments, the antimicrobial components do not destroy or damage food product. In addition, the antimicrobial components should not impart any off-tastes, odors, or changes in color of the food product. Antimicrobial components should remain stable over a wide range of temperatures, lighting, and environmental conditions. Antimicrobial components in the blend must survive melt temperatures require to form the film.

In an embodiment, the sealant layer has from 0.01 wt% to 15 wt% of an antimicrobial salt. In an embodiment, the sealant layer has from 0.5 wt% to 10 wt% of an antimicrobial salt. In other embodiments, the sealant layer has 1 wt% to 5 wt% of an antimicrobial salt. The antimicrobial salt may be present in the sealant layer in an amount of 0.5 wt%, 1 wt%, 2 wt%, 3 wt%, 4 wt%, 5 wt%, 6 wt%, 7 wt%, 8 wt%, 9 wt%, 10 wt%, or any range between these values. In other embodiments, the sealant layer may have 3 wt% of an antimicrobial salt.

Antimicrobial salts in the blend include sodium acetate, sodium L-lactate, sodium diacetate, lactic acid on calcium L-lactate carrier and blends thereof. In an embodiment the blend includes at least 25 wt% sodium acetate. In other embodiments the blend includes between 25 wt% and 75 wt% sodium acetate, between 30 wt% and 70 wt% sodium acetate, between 35 wt% and 65 wt% sodium acetate, and between 40 wt% and 60 wt% sodium acetate. In an embodiment the blend includes at least 25 wt% sodium L-lactate. In other embodiments the blend includes between 25 wt% and 75 wt% sodium L-lactate, between 30 wt% and 70 wt% sodium L-lactate, between 35 wt% and 65 wt% sodium L-lactate, and between 40 wt% and 60 wt% sodium L-lactate. In an embodiment, the blend includes between 25 and 50 wt% sodium acetate and between 25 and 50 wt% sodium L-lactate. In an embodiment the blend includes at least 99 wt% sodium L-lactate. In an embodiment the blend includes 20-40 wt% sodium acetate, 10-30 wt% sodium diacetate, 25-45 wt% sodium L-lactate and 1-5 wt% silica.

The antimicrobial blend may alternately, or in addition include lactic acid on a calcium L-lactate carrier having the lactic acid present in an amount of between 40 wt% to 80 wt% in the blend. In another embodiment, the lactic acid present in an amount of between 50 wt% to 70 wt% in the blend.

In an embodiment, the sealant layer has from 0.01 wt% to 15 wt% cis-13-docosenamide. In an embodiment, the sealant layer has from 0.5 wt% to 10 wt% cis-13-docosenamide. In other embodiments, the sealant layer has 1 wt% to 5 wt% cis-13-docosenamide. The cis-13-docosenamide may be present in the sealant layer in an amount of 0.5 wt%, 1 wt%, 2 wt%, 3 wt%, 4 wt%, 5 wt%, 6 wt%, 7 wt%, 8 wt%, 9 wt%, 10 wt%, or any range between these values. In other embodiments, the sealant layer may have 3 wt% cis-13-docosenamide.

The antimicrobial blend may further include direct food use approved antimicrobial additives. In an embodiment, the direct food use approved antimicrobial additive is rosemary extract, citrus extract or blends thereof. In an embodiment, the direct food use approved antimicrobial additive is present in the antimicrobial blend in amount between 0.5 to 5 wt% or between 1 to 3 wt%. In an embodiment, the antimicrobial additive includes a lauryl arginine ester.

The sealant layer includes a polymeric substrate. In other embodiments, the sealant layer may have one or more polymeric substrates. For example, in some embodiments, the sealant layer may additionally have one or more of the following: very low density polyethylene (VLDPE), high density polyethylene (HDPE), polyolefins (including homopolymers and copolymers such as, e.g., low density polyethylene (LDPE), medium density polyethylene (MDPE), linear low density polyethylene (LLDPE), polypropylene homopolymers and copolymers, and higher homologues), styrene homopolymers and copolymers (such as polystyrene, styrene maleic anhydride copolymer, styrene acrylonitrile copolymer, and acrylonitrile butadiene styrene copolymer), alkene-vinyl carboxylate copolymers (such as, e.g.,ethylene-vinyl acetate copolymers), alkene-methacrylic acid copolymers (such as, e.g., ethylene- acrylic acid copolymers), alkene-alkyl methacrylate copolymers (such as ethylene- methyl methacrylate copolymers), alkene-vinyl alcohol copolymers (such as, e.g., ethylene-vinyl alcohol copolymers), alkene-vinyl chloride copolymers (such as, e.g., ethylene-vinyl chloride copolymers), polycarbonates, polyamides, polyurethanes, polysulfones, poly(vinylidene chlorides), poly(vinyl chlorides), ionomers based on alkali metal or zinc salts of alkene-methacrylic acid copolymers, (meth)acrylate homopolymers and copolymers, fluoropolymers, thermoplastic polyesters, and mixtures of any of the foregoing polymers. Thus, in some embodiments, the sealant layer of the multilayer film can comprise blends of a very low density polyethylene with in addition to the antimicrobial blend. In some embodiments, the polymeric substrate may be polyolefin, polyolefin copolymers, polyester, polyamide, polystyrene, polycarbonate, or combinations thereof. In some embodiments, the polymeric substrate may be devoid of water soluble, partially water-insoluble, or water-swellable polymers.

Polyethylene refers to an ethylene homopolymer or copolymer. Polymer can refer to the product of a polymerization reaction, and can be inclusive of homopolymers, copolymers, terpolymers, and the like. In some embodiments, the layers of a film can consist essentially of a single polymer, or can have still additional polymers together therewith, i.e., blended therewith. Theterm "polymeric" can be used to describe a polymer-containing material (i.e., a polymeric film).

The term "polymeric substrate" as used herein refers to the polymeric components of a film layer that represent the majority (by weight) of the film layer. For example, the sealant layer of the disclosed film may have a polymeric substrate (e.g. polyester, polyamide, and/or polystyrene) in addition to antimicrobial blend. The term "resin" may be used interchangeably with "polymeric substrate".

The term "polyolefin" as used herein refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and a non-olefinic co-monomer co-polymerizable with the olefin, such as vinyl monomers, modified polymers thereof, and the like. Specific examples include polyethylene homopolymer, polypropylene homopolymer, polybutene homopolymer, ethylene-alpha-olefin copolymer, propylene-alpha-olefin copolymer, butene-alpha-olefin copolymer, ethylene-unsaturated ester copolymer, ethylene- unsaturated acid copolymer, (e.g. ethylene-ethyl acrylate copolymer, ethylene-butyl acrylate copolymer, ethylene-methyl acrylate copolymer, ethylene-acrylic acid copolymer, and ethylene-methacrylic acid copolymer), ethylene-vinyl acetate copolymer, ionomer resin, polymethylpentene, and the like.

Ethylene/alpha-olefin copolymers are copolymers of ethylene and one or more alpha-olefins, the copolymer having ethylene as the majority mole-percentage content. In some embodiments, the comonomer includes one or more C3-C20 alpha-olefins, e.g. C4-C12 or C4-C8 alpha-olefins. Alpha-olefins include, but are not limited to, 1-butene, 1-hexene, 1-octene, and mixtures thereof. Copolymer can refer to polymers formed by the polymerization reaction of at least two different monomers. For example, the copolymerization reaction product of ethylene and an alpha-olefin, such as 1-hexene. In some embodiments copolymer includes, for example, the copolymerization of a mixture of ethylene, propylene, 1- hexene, and 1-octene.

Ethylene/alpha-olefin copolymers include one or more of the following: 1) high density polyethylene, for example having a density greater than 0.94 g/cm³, 2) medium density polyethylene, for example having a density of from 0.93 to 0.94 g/cm³, 3) linear medium density polyethylene, for example having a density of from 0.926 to 0.94 g g/cm³, 4) low density polyethylene, for example having a density of from 0.915 to 0.939 g/cm³5) linear low density polyethylene, for example having a density of from 0.915 to 0.935 g/cm³, 6) very-low or ultra-low density polyethylene, for example having density below 0.915 g/cm³, and homogeneous ethylene/alpha-olefin copolymers. Homogeneous ethylene/alpha-olefin copolymers include those having a density of less than about any of the following: 0.925, 0.922, 0.92, 0.917, 0.915, 0.912, 0.91, 0.907, 0.905, 0.903, 0.9, and 0.86 g/cm³. Unless otherwise indicated, all densities herein are measured according to ASTM D1505.

The sealant layer has between 70 to 99 wt% of at least one polymeric substrate. The sealant layer may have 70 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89%, 90 wt%, 91 wt%, 92 wt%, 93 wt%, 94 wt%, 95 wt%, 96 wt%, 97 wt%, 98 wt%, 99 wt%, polymeric substrate, or any range between these values. In some embodiments, the sealant layer may have 75 wt% of at least one polymeric substrate. In other embodiments, the sealant layer may have 80 wt% of at least one polymeric substrate. In further embodiments, the sealant layer may have 85 wt% of at least one polymeric substrate. In some embodiments, the sealant layer may have 90 wt% of at least one polymeric substrate. In some embodiments, the sealant layer may have 95 wt% of at least one polymeric substrate.

In some embodiments, the sealant layer can additionally comprise an antiblock additive, as would be known to those of ordinary skill in the art. For example, suitable antiblock additives can include (but are not limited to): natural silica (such as diatomaceous earth), synthetic silica, glass spheres, acrylic polymer, silicone resin microbeads, zeolites, ceramic particles, and the like. As would be well understood to those of ordinary skill in the art, the amount of antiblock used in the sealant layer can be varied for particular formulations and processing conditions (such as, for example, about 0.5% to about 15% by weight of the antiblock additive used).

The thickness of the sealant layer may be selected to provide sufficient material to effect a strong heat seal bond, yet not so thick so as to negatively affect the characteristics of the film to an unacceptable level. The sealant layer may have a thickness of at least any of the following values: 1.27 µm, 2.54 µm, 3.81 µm, 5.08 µm, 6.35 µm, 7.62 µm, 8.89 µm, 10.16 µm, 11.43 µm, 12.7 µm, 15.24 µm (0.05 mils, 0.1 mils, 0.15 mils, 0.2 mils, 0.25 mils, 0.3 mils, 0.35 mils, 0.4 mils, 0.45 mils, 0.5 mils, and 0.6 mils). The sealant layer may have a thickness less than any of the following values: 127 µm, 101.6 µm, 76.2 µm, 50.8 µm, 25.4 µm, 17.78 µm, 12.7 µm, 7.62 µm (5 mils, 4 mils, 3 mils, 2 mils, 1 mil, 0.7 mils, 0.5 mils, and 0.3 mils). The thickness of the sealant layer as a percentage of the total thickness of the film may be less that any of the following values: 50%, 40%, 30%, 25%, 20%, 15%, 10%, and 5%; and may range between any of the forgoing values (e.g., from 10% to 30%).

In an embodiment, the sealant layer has a melting point less than any of the following values: 220°C, 210°C, 200°C, 190°C and 180°C; and the melting point of the sealant layer may be at least any of the following values: 120°C, 130°C, 140°C and 150°C. All references to the melting point of a polymer, a resin, or a film layer in this application refer to the melting peak temperature of the dominant melting phase of the polymer, resin, or layer as determined by differential scanning calorimetry according to ASTM D-3418.

In embodiments where the sealant layer comprises amorphous material, then the sealing layer may not clearly display a melting point. The glass transition temperature for the sealing layer may be less than, and may range between, any of the following values: 125°C, 120°C, 110°C, 100°C, 90°C, 80°C, 70°C, 60°C and 50°C; measured where the relative humidity may be any of the following values: 100%, 75%, 50%, 25%, and 0%. All references to the glass transition temperature of a polymer, a resin, or a film layer in this application refer to the characteristic temperature at which glassy or amorphous polymers become flexible as determined by differential scanning calorimetry (DSC) according to ASTM D-3417.

A tie layer refers to an internal film layer that adheres two layers to one another. In an embodiment the tie layer includes a polyolefin or ethylene/alpha-olefin copolymer. In some embodiments, the tie layers comprise a nonpolar polymer having a polar group grafted thereon, such that the polymer is capable of covalent bonding to polar polymers such as polyamide and ethylene/vinyl alcohol copolymer.

In some embodiments, the tie layers can comprise, but are not limited to, modified polyolefin, modified ethylene/vinyl acetate copolymer, and/or homogeneous ethylene/alpha-olefin copolymer. Additional tie layers can include, but are not limited to, one or more polymers that contain mer units derived from at least one of the following: C2 -C12 alpha-olefin, styrene, amide, ester, and urethane. The multilayer film may have 1, 2, 3, 4, 5, 6, or 7 tie layers. In embodiments, the tie layer includes at least 0.5, 1.0, 1.5, 2.0, 2.5 or 3.0% by weight of a polymer found in adjacent layers.

Examples of tie layer polymers include one or more of ethylene/vinyl acetate copolymer having a vinyl acetate content of at least 15 weight %, ethylene/methyl acrylate copolymer having a methyl acrylate content of at least 20 weight %, anhydride-modified ethylene/methyl acrylate copolymer having a methyl acrylate content of at least 20%, and anhydride-modified ethylene/alpha-olefin copolymer, such as an anhydride grafted linear low density polyethylene.

In an embodiment, the multilayer film includes a tie layer in direct contact with the sealant layer. The tie layer included between 1% and 10% by weight of a cyclic olefin copolymer. In one embodiment the tie layer includes between 2% and 6% by weight of a cyclic olefin copolymer. In one embodiment the tie layer includes between 3% and 5% by weight of a cyclic olefin copolymer.

An abuse layer is a layer of a film that can resist abrasion, puncture, and/or other potential causes of reduction of package integrity, and/or potential causes of reduction of package appearance quality. Polymers suitable for use in the abuse layer include, but are not limited to, one or more of the following: polyester, polyamide, polyethyleneterephthalate (PET), polyurethane, polystyrene, and polyolefin.

A barrier layer includes one or more barrier components. Useful barrier components include, but are not limited to: ethylene/vinyl alcohol copolymer, polyacrylonitrile, polyvinylidene chloride, polyethylene carbonate, polyester, polyvinyl alcohol, acrylonitrile-butadiene copolymer, polyalkylene carbonate, polyacrylonitrile and polyamides such as, nylon-MXD,6 (either with or without nanocomposite), nylon-MXD,6/MXD,I. In embodiments, the multilayer film includes a barrier layer.

In an embodiment, the ethylene/vinyl alcohol copolymer of a barrier layer has an ethylene content of, for example, between 20% and 45%, between 25% and 35%, and 32% by weight. Ethylene/vinyl alcohol copolymer may include saponified or hydrolyzed ethylene/vinyl acetate copolymers, such as those having a degree of hydrolysis of at least 50%, or of at least 85%.

The barrier layer has a thickness and composition sufficient to impart to the multilayer film an oxygen transmission rate of no more than any of the following values: 150, 100, 50, 45, 40, 35, 30, 25, 20, 15, 10, and 5 cubic centimeters (at standard temperature and pressure) per square meter per day per 1 atmosphere of oxygen pressure differential measured at 0% relative humidity and 23°C. All references to oxygen transmission rate in this application are measured at these conditions according to ASTM D-3985.

A core layer refers to any internal film layer that has a primary function other than serving as an adhesive or compatibilizer for adhering two layers to one another. In some embodiments, the core layer or layers provide a multilayer film with a desired quality, such as level of strength, modulus, optics, added abuse resistance, and/or specific impermeability. In an embodiment, the core layer may include one or more polymers that include mer units derived from at least one of a C2-C12 alpha-olefin, styrene, amides, esters, urethanes, or combinations thereof. Preferred among these are those homo- and co-polymers (including terpolymers, etc.) that include mer units derived from ethylene, propylene, and 1-butene, even more preferably an ethylene copolymer such as, for example, ethylene/C3-C8a-olefin copolymer, ethylene/ethylenically unsaturated ester copolymer (e.g., ethylene/butyl acrylate copolymer), ethylene/ethylenically unsaturated acid copolymer (e.g., ethylene/(meth)acrylic acid copolymer), and ethylene/vinyl acetate copolymer. The core layer may have ethylene/C3-C8a-olefin copolymer, ethylene/ethylenically unsaturated ester copolymer (e.g., ethylene/butyl acrylate copolymer), ethylene/ethylenically unsaturated acid copolymer (e.g., ethylene/(meth)acrylic acid copolymer), ethylene/vinyl acetate copolymer, or combinations thereof.

In an embodiment, one or more core layers include a blend of ethylene vinyl acetate and very low density polyethylene. In embodiments, the blend in the at least one core layer includes between 15 and 70 wt% ethylene vinyl acetate and the balance very low density polyethylene. It is understood that trace additives (less than 5%) may be included in the core layer.

Additional layers, or the layers described herein may further include one or more additives useful in packaging films, such as, antiblocking agents, slip agents, antifog agents, colorants, pigments, dyes, flavorants, antimicrobial agents, heat stabilizers, meat preservatives, antioxidants, fillers, radiation stabilizers, antistatic agents, oxygen scavengers and odor scavengers.

Various combinations of layers can be used in the formation of a multilayer film. The following are several non-limiting examples of combinations, wherein letters are used to represent film layers: S/A, S/B/A, S/C/A, S/C/A/A, S/T/C/T/A, S/T/T/C/T/T/A, S/T/C/T/T/A, S/T/T/C/T/A, S/A/S, S/C/S, S/T/B/T/A, S/T/T/B/T/T/A, S/T/B/T/T/A, S/T/T/B/T/A, S/C/T/B/T/C/A, S/C/T/B/T/C/T/A, S/C/T/B/T/T/C/T/A, S/A/T/B/T/A, S/A/T/C/T/A wherein S represents a sealant layer; C represents a core layer; T represents a tie layer, B represents a barrier layer; A represents abuse layers. One or more tie layers ("T") can be used between any one or more layers of in any of the above multilayer film structures.

The film may have a gloss (i.e., specular gloss) as measured against the outside layer of at least about, and/or at most about, any of the following values: 40%, 50%, 60%, 63%, 65%, 70%, 75%, 80%, 85%, 90%, and 95%. These percentages represent the ratio of light reflected from the sample to the original amount of light striking the sample at the designated angle. All references to "gloss" values in this application are in accordance with ASTM D 2457 (45° angle), which is incorporated herein in its entirety by reference.

Haze is a measurement of the transmitted light scattered more than 2.5° from the axis of the incident light. Haze is measured against the outside surface of the film according to the method of ASTM D 1003, which is incorporated herein in its entirety by reference. All references to "haze" values in this application are by this standard. The haze of the film may be not higher than any of the following values: 20%, 15%, 10%, 9%, 8%, 7%, 6%, 5%, 4%, 3%, and 1%. Any of the first and/or second films may have any of these haze values after a representative sample of the film is placed for two hours in a conventional oven having an air temperature of 204.4°C.

The first and/or second films may be transparent (at least in the non-printed regions) so that the packaged article is visible through the film. "Transparent" as used herein means that the material transmits incident light with negligible scattering and little absorption, enabling objects (e.g., packaged food or print) to be seen clearly through the material under typical unaided viewing conditions (i.e., the expected use conditions of the material). The transparency (i.e., clarity) of the film may be at least any of the following values: 20%, 25%, 30%, 40%, 50%, 65%, 70%, 75%, 80%, 85%, and 95%, as measured in accordance with ASTM D1746. All references to "transparency" values in this application are by this standard.

In an embodiment the multilayer film has a heat-shrinkable attribute. Heat-shrinkable refer to the tendency of a film to shrink upon the application of heat such that the size (area) of the film decreases while the film is in an unrestrained state. Likewise, the tension of a heat- shrinkable film increases upon the application of heat if the film is restrained from shrinking. For example, the film may have a free shrink in at least one direction (i.e., machine or transverse direction) or in at least each of two directions (machine and transverse directions) measured at 104.4°C of at least any of the following: 3%, 7%, 10%, 15%, 20%, 25%, 30%, 40%, 50%, 55%, 60%, 65%, 70%, 75%, 80% and 85%. Further, the films may have any of a free shrink in at least one direction (machine or transverse direction) or in at least each of two directions (machine and transverse directions) of at least any of these listed shrink values when measured at any of 37.8°C, 48.9°C, 60.0°C, 71.1°C, 85.0°C, 87.8°C, 93.3°C, and 98.9°C. In embodiment the multilayer film exhibits a total free shrink of at least 10% at 85.0°C. In embodiment the multilayer film exhibits a total free shrink of at least 65% at 85.0°C. Unless otherwise indicated, each reference to free shrink in this application means a free shrink determined by measuring the percent dimensional change in a 10 cm x 10 cm specimen when subjected to selected heat (i.e., at a certain temperature exposure) according to ASTM D-2732.

As used herein, the term "machine direction" ("MD"), refers to a direction along the length of the film, i.e., in the direction of the film as the film is formed during extrusion. As used herein, the phrase "machine direction" refers to the direction in which the film emerges from the die. Of course, this direction corresponds with the direction the extrudate is forwarded during the film production process. The phrase "machine direction" corresponds with "longitudinal direction". However, as used herein, the phrase "machine direction" includes not only the direction along a film that corresponds with the direction the film traveled as it passed over idler rollers in the film production process, it also includes directions that deviate up to 44 degrees from the direction the film traveled as it passed over idler rollers in the production process.

As used herein, the phrase "transverse direction" refers to a direction perpendicular to the machine direction. The transverse direction also includes directions that deviate up to 44 degrees from the direction the film traveled as it passed over idler rollers in the production process.

The multilayer film may be manufactured by thermoplastic film-forming processes known in the art (e.g., tubular or blown-film extrusion, coextrusion, extrusion coating, flat cast extrusion, annular cast extrusion). A combination of these processes may also be employed. For example, the film may be made using any of a "double bubble" or "triple bubble" extrusion processes.

In embodiments, the multilayer film may be oriented or non-oriented. The film may be oriented in either the machine (i.e., longitudinal) or the transverse direction, or in both directions (i.e., biaxially oriented), for example, in order to enhance the optics, strength, and durability of the film. For example, the film may be oriented in one of the machine or transverse directions or in both of these directions by at least any of the following ratios: 2:1, 2.5:1, 2.7:1, 3:1, 3.5:1, and 4:1. The film may be oriented in one of the machine or transverse directions or in both of these directions by no more than any of the following ratios: 10:1, 9:1, 8:1, 7:1, 6:1, 5:1, and 4:1. If the film is oriented, then it may be heat set or annealed after orientation to reduce the heat shrink attribute to a desired level or to help obtain a desired crystalline state of the film. For example, the first and/or second films may be made using a tenterframe process.

The term "oriented" as used herein refers to a polymer-containing material that has been stretched at the softening temperature but below the melting temperature, followed by being "set" in the stretched configuration by cooling the material while substantially retaining the stretched dimensions. Upon subsequently heating unrestrained, unannealed, oriented polymer -containing material to its orientation temperature, heat shrinkage is produced almost to the original unstretched, i.e., pre- oriented dimensions. Orienting involves initially cooling an extruded film to a solid state (by, for example, cascading water or chilled air quenching) followed by reheating the film to within its orientation temperature range and stretching it. The stretching step can be accomplished in many ways such as by, for example, "blown bubble" or "tenter framing" techniques, both of which are well known to those skilled in the art. After being heated and stretched, the film is quenched rapidly while being maintained in its stretched configuration so as to set or lock in the oriented molecular configuration. An oriented film can be annealed to reduce or completely eliminate free shrink in one or more directions

In embodiments the multilayer film is partially or wholly cross-linked. To produce cross-linking a film, layer or layers of the film are treated with a suitable radiation dosage of high-energy electrons. In embodiments an electron accelerator introduces the radiation dosage, with a dosage level being determined by standard dosimetry methods. It is understood that other accelerators, such as a Van der Graaf generator or resonating transformer may be used. The radiation is not limited to electrons from an accelerator since any ionizing radiation may be used. In embodiments the radiation dosage of high energy electrons is up to 140 kGreys, in the range of from 10 to 120 kGreys, in the range of from 20 to 100, or in the range of from 30 to 80 kGreys. In an embodiment irradiation is performed prior to orientation. In an embodiment irradiation is performed after orientation.

In some embodiments, the presently multilayer film exhibits a sufficient Young's modulus so as to withstand normal handling and use conditions. In some embodiments, the film has a Young's modulus of at least about 200 MPa; in some embodiments, at least about 230 MPa; in some embodiments, at least about 260 MPa; in some embodiments, at least about 300 MPa; in some embodiments, at least about 330 MPa; in some embodiments, at least about 360 MPa; and in some embodiments, at least about 400 MPa. As would be apparent those of ordinary skill in the art, Young's modulus is measured in accordance with ASTM D-882, which is hereby incorporated by reference.

In some embodiments, the multilayer film can be printed. In the simplest cases, the multilayer film can be printed using black letters with the product identification and the instructions for correct product storage or use. Alternatively, in the most complex cases, the multilayer film can comprise designs of various colors, product advertising, and/or production information. To improve print adhesion, in some embodiments the multilayer film can be primed using a coating of a resin that improves adhesion, gloss, and/or durability of the print. In some embodiments, the printed surface of the film can be rendered more receptive to ink by subjecting it to a corona discharge treatment or to any other treatment that is known to increase surface energy, such as flame treatment, as would be apparent to those of ordinary skill in the art.

In an embodiment the multilayer film is part of a package containing a food product. Packaged product as used herein, refers to the combination of a product that is surrounded by a packaging material. Package and packaging article refers to packaging materials configured around a product being packaged. As such, the term "package" includes all of the packaging around the product, but not the product itself. Package and packaging article is inclusive end-seal bags, side-seal bags, L-seal bags, U-seal bags (also referred to as "pouches"), gusseted bags, lap seal bags, backseamed tubings, and seamless casings, as well as packages made from such articles by placing a product in the article and sealing the article so that the product is substantially surrounded by the heat-shrinkable multilayer film from which the packaging article is made. As used herein, packaging articles have two "sides". Generally, a "side" of a packaging article corresponds with half of the article. For example, an end-seal bag is a lay-flat bag and has two sides (in this case two lay-flat sides), with each side corresponding with a lay-flat side of the seamless tubing from which the end-seal bag is made. Each lay-flat side of a seamless tubing is bounded by the creases formed as the tubing is collapsed into its lay-flat configuration between nip rollers. Each side of an end-seal bag is bounded by the bag top edge, the bag bottom edge, and the two tubing creases running the length of the bag. Likewise, a side-seal bag also has two sides, with each side also being a lay-flat side, with each side of the side-seal bag being bounded by bag side edges, a bag top edge, and a bag bottom corresponding with a tubing crease. A casing, whether seamless or backseamed, also has two sides, with each side being bounded by the ends of the casing and by creases formed as the casing is configured into its lay-flat configuration. While gusseted bags and other packaging articles may not be fully lay-flat in their structure because they have more than two flat sides, they nevertheless have "sides" bounded by creases and edges.

As used herein "bag" refers to a packaging article having an open top, side edges, or bottom edge. The term "bag" includes lay-flat bags, pouches, casings (seamless casings and backseamed casings, including lap-sealed casings, fin- sealed casings, and buttsealed backseamed casings having backseaming tape thereon) L-seal bags, backseamed bags, U-seal bags, and pouches.

In embodiments a product is packaged within the packaging article. The products may be packaged in the multilayer film in a variety of ways known to those of skill in the art such that the product is at least partially surrounded by the multilayer film. Thus, in some embodiments, the multilayer film can be packaged using vacuum packaging, shrink wrapping, modified atmosphere packaging, bags, pouches, films, trays, bowls, clam shell packaging, web packaging, and the like. Such methods are well known to those of ordinary skill in the packaging art.

As set forth in detail herein above, the multilayer film may be used to package a wide variety of food products, including meat products. In addition, the multilayer films may also be used to provide an antimicrobial surface in a variety of applications, such as in medical environments and equipment and in food packaging.

Food products include meat, which refers to any myoglobin-containing or hemoglobin-containing tissue from an animal, such as beef, pork, veal, lamb, mutton, chicken or turkey; and game such as venison, quail, and duck. The meat can be in a variety of forms including primal cuts, subprimal cuts, deli cuts and deli meats, and/or retail cuts as well as ground, comminuted, or mixed. The meat or meat product is preferably fresh, raw, uncooked meat, but can also be frozen, hard chilled, or thawed. In some embodiments, the meat can be subjected to other irradiative, biological, chemical and/or physical treatments. Examples may include smoking the meat or processing the meat. The suitability of any particular such treatment can be determined without undue experimentation in view of the present disclosure

The multilayer film of the packaging has a sealant layer including the antimicrobial blend disclosed herein. In an embodiment the antimicrobial blend includes an antimicrobial salt selected from the group consisting of sodium acetate, sodium L-lactate, sodium diacetate, lactic acid on calcium L-lactate carrier and blends thereof and cis-13-docosenamide. The antimicrobial blend is present in the sealant layer in amount that is not more than 15 wt% as compared to the sealant layer. In another embodiment, the antimicrobial blend is coated onto the sealant layer in amount that is not more than 15 wt% as compared to the sealant layer. In some embodiments, the antimicrobial blend further includes lauryl arginine esters with rosemary extracts, citrus extracts and blends thereof.

The combination of an antimicrobial salt and cis-13-docosenamide allows the multilayer film to have an improved antimicrobial effect. The multilayer film being able to destroy or inhibit the growth of microorganisms. In an embodiment the antimicrobial blend is present in the sealant layer in amount that is not more than 15 wt% as compared to the sealant layer. In another embodiment the antimicrobial blend is present in the sealant layer in amount that is not more than 10 wt% as compared to the sealant layer.

Other exemplary packages are contemplated such as, but not limited to a top web adhered to tray, a top web adhered to a bottom web, and a lid film over a tray.

Microorganisms on food products can be controlled by packaging the product in a multilayer film of the type disclosed herein above (i.e., a film comprising a polymeric substrate, and an antimicrobial blend incorporated into the sealant layer of the film). Thus, when a product is packaged in the multilayer film, the initial contact with the film reduces the number of microorganisms on the surface of the product on contact. In addition, by allowing the film to remain in contact with the product during packaging, the antimicrobial composition can reduce the number of microorganisms on the food product between the initial application and packaging if the food product becomes re-contaminated. As a result, pathogenic or spoilage microorganisms in the product are controlled (i.e., the number of microbes is reduced compared to products packaged in films lacking an antimicrobial agent).

In some embodiments, the microorganism includes, but are not limited to E. coli, brochothrix thermosphacta, camobacterium divergens, klebsiella spp., kluyvera spp., lactobacillus spp., leuconostoc spp., shewanella putrefaciens, pseudomonas spp., enterobacter cloacae, listeria spp., aeromonas spp., clostridium spp., or combinations thereof. In one embodiment the microorganism is E. coli.

In some embodiments, the multilayer film demonstrates at least 1 log CFU/g kill in a microorganism population. In embodiments, the multilayer film demonstrates 1 log CFU/g kill in a microorganism population, 1.5 log CFU/g kill in a microorganism population, 2 log CFU/g kill in a microorganism population, 2.5 log CFU/g kill in a microorganism population, 3 log CFU/g kill in a microorganism population, 3.5 log CFU/g kill in a microorganism population, 4 log CFU/g kill in a microorganism population, 4.5 log CFU/g kill in a microorganism population, 5 log CFU/g kill in a microorganism population, 5.5 log CFU/g kill in a microorganism population, 6 log CFU/g kill in a microorganism population, 6.5 log CFU/g kill in a microorganism population, 7 log CFU/g kill in a microorganism population, 7.5 log CFU/g kill in a microorganism population, 8 log CFU/g kill in a microorganism population, 8.5 log CFU/g kill in a microorganism population, 9 log CFU/g kill in a microorganism population, or any range between these values.

In some embodiments, the multilayer film may demonstrate at least about 1 log CFU/g kill in E. coli population. In some embodiments, the multilayer film may demonstrate 1 log CFU/g to 8 log CFU/g kill in E. coli population. The multilayer film may demonstrate 1 log CFU/g kill in E. coli population, 1.5 log CFU/g kill in E. coli population, 2 log CFU/g kill in E. coli population, 2.5 log CFU/g kill in E. coli population, 3 log CFU/g kill in E. coli population, 3.5 log CFU/g kill in E. coli population, 4 log CFU/g kill in E. coli population, 4.5 log CFU/g kill in E. coli population, 5 log CFU/g kill in E. coli population, 5.5 log CFU/g kill in E. coli population, 6 log CFU/g kill in E. coli population, 6.5 log CFU/g kill in E. coli population, 7 log CFU/g kill in E. coli population, 7.5 log CFU/g kill in E. coli population, 8 log CFU/g kill in E. coli population, 8.5 log CFU/g kill in E. coli population, 9 log CFU/g kill in E. coli population, or any range between these values.

In some embodiments, the multilayer film exhibits a total viable count (TVC) of microorganisms of 1 log CFU/g or less. The multilayer film may have a TVC of microorganisms of 1 log CFU/g, 0.9 log CFU/g, 0.8 log CFU/g, 0.7 log CFU/g, 0.6 log CFU/g, 0.5 log CFU/g, 0.4 log CFU/g, 0.3 log CFU/g, 0.2 log CFU/g, 0.1 log CFU/g, 0.05 log CFU/g, 0.01 log CFU/g, or any range between these values.

Antimicrobial refers to microbicidal activity or microbe growth inhibition in a microbe population. In some embodiments, the term "antimicrobial" refers to a greater than 1 log reduction; a greater than 2 log reduction; a greater than 3 log reduction; or a greater than 4 log reduction in the growth of a population of microbes relative to a control. Microbe and microorganism refers to any organism capable of contaminating meat, food, or other products, thereby making such product unsuitable or unhealthy for human or animal consumption or contact. For example, in some embodiments, microbes can include bacteria, fungi, yeasts, algae, molds, mycoplasmids, protozoa, viruses, and the like.

In other embodiments, methods for making the multilayer film and packaged product are disclosed. The method of making a multilayer film may include mixing the antimicrobial blend and the polymeric substrate to make a blended resin. Blending may be performed by methods such as using single screw or twin- screw extruders. The polymeric substrate may be fed into the blender and stabilized. An additive may be added before the polymeric substrate is stabilized. The antimicrobial blend may be added after the polymeric substrate has stabilized. The antimicrobial blend may be added before the polymeric substrate has stabilized.

In an embodiment, the method of making a multilayer film includes extruding the blend of polymeric substrate, the antimicrobial blend through a die to form an extrudate.

In an embodiment, the method of making a multilayer film includes forming a multilayer film. The antimicrobial blend is present in a sealant layer of the multilayer film in an amount of about 0.01% to about 15% by weight of the sealant layer.

The multilayer film can be constructed using any of a wide variety of conventional techniques. For example, the film can be produced using a hot blown process, wherein the film is extruded through an annular die and immediately blown to a desired diameter that results in a desired film thickness while the polymer is at or near its melt temperature. Such hot blown films are generally not considered to be heat-shrinkable because the amount of heat-shrinkability is not high enough to provide the shrink character typically required of heat-shrinkable films. Although hot blown films are oriented, the orientation occurs in the molten state, without producing the orientation-induced stress that renders the film heat-shrinkable.

In other embodiments, the multilayer film can be constructed using a cast process. Particularly, the film can be cast from a slot die with the extrudate being quenched by immediately contacting a chilled roll, resulting in solidification and cooling, followed by being reheated to a temperature below the melt point (preferably to the softening point of the polymer), followed by solid-state orientation using a tenter frame. Alternatively, the film can be formed by downward casting from an annular die, with the resulting annular tape being quenched using cascading water, cooled air (orother gas), or even ambient air. The resulting solidified and cooled annular tape is then reheated to a desired orientation temperature and oriented while in the solid state, using a trapped bubble.

Where the multilayer film has more than one layer, preparation of the multilayer film may be by coextrusion. Particularly, the film can be prepared by the simultaneous coextrusion of the respective film-forming layers through independent orifices of a multiorifice die, and thereafter uniting the still molten layers. Alternatively, the film can be prepared by a single-channel coextrusion in which molten streams of the respective polymers are first united within a channel leading to a die manifold, and thereafter extruded together from the die orifice under conditions of streamline flow without intermixing thereby to produce a multi-layer polymeric film that can be oriented and heat-set. In addition, formation of a multi-layer film can also be by conventional lamination techniques, such as by laminating together a preformed first layer and a preformed second layer, or by casting the first layer onto a preformed second layer.

The multilayer film has a sealant layer comprising an antimicrobial blend incorporated therein. Accordingly, the antimicrobial properties associated with the antimicrobial blend are integrated within the film. As a result, when the film contacts a product, the antimicrobial agent is thereby used to kill microbial agents. In an embodiment there is a 0.1 to 4.0 or greater log reduction versus an untreated control (depending on the level of contamination start). Thus, when the product is a food product, spoilage can be reduced and shelf life extended. In general, improvements in the spoilage characteristics of food products lead to retention of desirable color, flavor, and nutrients with minimal formation of undesirable compounds. Economic benefits of reduced spoilage include cost reduction related to capital, energy, and packaging material savings, and a longer shelf life.

### Examples:

The antimicrobial function of several direct food additives based on lactic acid and salts of lactic and acetic acids have been tested. Several of the direct food use approved antimicrobial additives were extrudable into sealant resins. Antimicrobial performance however, was zero or extremely low. Additional tests were conducted using a combination of these antimicrobial materials with cis-13-docosenamide, other additives or additional antimicrobials. Certain combinations have been found to not only enhance the performance of the antimicrobial additives but to demonstrate a beneficial synergistic effect against bacteria, i.e., better performance than either material alone. Exemplary antimicrobial salts are shown in Table 1. Primary antimicrobial additives are shown in Table 2.

**Table 1**

| **Primary Direct Food Use Approved Antimicrobial Additives** | |
|---|---|
| **Chemical Composition** | **Trade Name** |
| 1:1 Sodium acetate, Sodium L-lactate blend | Optiform Ace S50 |
| 34% Sodium Acetate/20% Sodium Diacetate/ 34% Sodium L-lactate/2% Silica | Optiform Ace S61 |
| Sodium L-lactate | Purasal S98 |
| 60% Lactic acid on Ca L-lactate carrier | Purac Powder 60 |

**Table 2**

| **Secondary Direct Food Use Approved Antimicrobial Additives** | | |
|---|---|---|
| **Chemical Composition** | **Trade Name** | **Supplier** |
| Rosemary Extracts | OxiKan CLS | Kancor Ingredients, LTD |
| Citrus and Rosemary Extracts | Cleanatis^{™} M1 | Naturex |
| Citrus and Rosemary Extracts | Cleanatis^{™} M2 | Naturex |

### Controls: Test 1

Each of the materials shown in Tables 1 and 2 was compounded into sealant resin, comprised of Affinity PL 1280G, a C8-VLDPE and films were prepared for microbial control testing. The primary additives were tested at 10 wt%. Secondary additives and Cis-13-docosenamide (sold under the trade name Erucamide) were tested as detailed in Table 3.

### Samples:

**Test 2:** Each of the primary antimicrobial materials in Table 1 was compounded at 10 wt% into sealant resin comprised of Affinity PL 1280G1, a C8-VLDPE containing 1664 ppm of cis-13-docosenamide and films were prepared for microbial control testing.

**Tests 3-5:** Each of the primary antimicrobial materials in Table 1 was compounded at 10% w/w into sealant resin comprised of Affinity PL 1280G, a C8-VLDPE and 2-3 wt% of the secondary antimicrobials (Table 2) or cis-13-docosenamide were added as detailed in Table 3 and films were prepared for microbial control testing.

### Microbial Analysis Methods:

The Japanese Industrial Standard test for Antimicrobial Activity and Efficacy JIS Z 2801 and the International Standard ISO 22196, "Measurement of Antibacterial Activity on Plastics and Other Non-porous Surfaces", are the recognized test methods for the evaluation of the efficacy of an antibacterial plastic. These test methods are designed to quantitatively test the ability of plastics and other antimicrobial surfaces to inhibit the growth of microorganisms (Bacteriostatic) or kill them (Bactericidal), over a 24 hour period of contact.

Unfortunately, the ISO 22196 / JIS Z 2801 method is not necessarily representative of how an actual antimicrobial film may respond in packaging applications. This test does not account for "surface contamination", since it uses a relatively dilute, pure, liquid microbial inoculum, which is spread over a considerable surface area, for a limited time of 24 hours. The results from the ISO 22196 are therefore predominantly a "best-case" test for many plastics. Frequently, it has been found when using this test method, a material will be determined to be an effective antimicrobial; however, upon packaging a product for a normal shelf-life test, no benefit will be seen.

Due to the limitations seen in the laboratory with the ISO 22196 test, a modified film test was developed. The test protocol was designed to simulate an actual package environment. The modified tests used meat purge and a testing time of 5 days, which was found to provide a more accurate view as to how an antimicrobial package might perform. "Purge" is the liquid that exudes from cut meat or poultry and collects freely in the package. This is typically found in larger packages. The purge liquid can be carefully removed from the packages and used for the following tests. For the tests conducted in this study, beef purge was used. The beef purge is a combination of water, fats, enzymes and meat proteins that drain from the meat. The purge also contains the same bacterial flora as that which contaminates the surface of the meat itself. Thus, this purge could include gram positive bacteria like *Lactobacillus* species, (Lactic Acid Bacteria), and Listeria species, as well as, gram negative bacteria like *E. coli, Campylobacter* or *Salmonella* species. The exact species of microbes are not specifically known, but the impact of the purge on antimicrobial performance has been well demonstrated to best simulate an actual meat package test.

### Film Test Method:

Antimicrobial films may contain the active ingredient extruded into the surface layer of the film, or coated onto the film. A test method was developed to provide a continuous, uniform coverage of a known amount of the inoculum on the test films.

A 2.54 cm by 7.62 cm (1 inch by 3 inch) "tape well" is created on the antimicrobial test film. The "tape well" is crafted by cutting a 2.54 cm by 7.62 cm (1 inch by 3 inch) section from a strip of 7.62 cm (3 inch) wide vinyl tape and applying the tape to the antimicrobial film surface. The test film is secured to a Lexan sheet for stability and handling.

To the well, 0.2 ml of an inoculum is added. The inoculums are either the meat purge or cultures of nutrient broth with *E*. *coli* (ATTC #4157 or ATTC #33876) added to the broth. The *Escherichia coli* is a gram-negative, facultative, anaerobic, rod-shaped, coliform bacterium.

A 2.54 cm by 7.62 cm (1 inch by 3 inch) strip of Cryovac brand D-955, a nonbarrier film, is placed over the inoculum to provide complete wetting of the test film with the inoculum and to prevent desiccation of the inoculum. The high OTR properties of the D-955 allow growth of the inoculum trapped between the antimicrobial test film and the D-955 film.

Inoculated films are incubated at refrigerated conditions of 4.4°C (40°F) for both 1 and 5 days in a high humidity sealed pouch.

The inoculum is recovered from the well by both adding the inoculum wetted D-955 film over-layment to a distilled water test tube and by swabbing the test film surface twice and placing the swab in the same test tube.

The total aerobic plate count is enumerated using Aerobic Plate Count 3M Petri Film.

Results are reported as log₁₀ CFU/g. The difference in counts between the sample and control is the "delta log CFU/g". This is mathematically converted to a percent reduction = (1-10^{(-delta log CFU/g)})*100

**Table 3**

| | **Antimicrobial Performance vs. VLDPE Control** | | | | | |
|---|---|---|---|---|---|---|
| **Primary Antimicrobial** | | **None** | **Amide wax** | **Secondary Antimicrobials** | | |
| | | | **alone** | **With Amide wax** | | |
| | | **Control** | **Erucamide** | **KANCOR** | **Cleanatis** | **Cleanatis** |
| | | | | **CLS @ 2%** | **M1 @ 2%** | **M2 @2%** |
| | | **Test 1** | **Test 2** | **Test 3** | **Test 4** | **Test 5** |
| VLDPE + Additive | | 0 | 0 | 89.7671 | 87.12 | 99.945 |
| Optiform Ace S50 | | 8.899 | 99.9871 | 99.0667 | 99.9962 | 99.9956 |
| Optiform Ace S61 | | 42.456 | 99.999 | 99.9996 | 99.9978 | 99.9977 |
| Purasal S98 | | 0 | 0 | 92.0567 | 8.8 | 64.5187 |
| Purac Powder 60 | | 0 | 56.3484 | 99.4246 | 97.05 | 99.9611 |

**Test 1:** The materials were each compounded into Affinity PL 1280G, a C8-VLDPE, sealant resin and the microbial "film test" was conducted. A desired test result would be >90% reduction in microbes, and more preferably >99% reduction in microbes. As can be seen by the data in Table 4, which shows the measured percent reduction in microbes during a 5 day test with beef purge inoculum, the 4 test antimicrobials did not show significant antimicrobial performance when compounded at 10 wt% into the sealant resin.

**Test 2:** The current bags sealant resin used in commercial applications is Affinity PL 1280G1. This resin contains a slip additive cis-13-docosenamide. To test the effect of cis-13-docosenamide on the antimicrobials, the materials were each compounded at 10 wt% into the Affinity PL 1280G1, a C8-VLDPE containing 1664 ppm of cis-13-docosenamide, an amide wax. Unexpectedly, samples showed significantly improved performance with 2 materials having >99% reductions in microbes.

**Test 3:** The 4 antimicrobial materials were each compounded into VLDPE resin at 10 wt% with 2 wt% added Kancor OxiKan CLS. This material is sold commercially as a direct food antioxidant additive and is comprised of deodorized and decolorized extracts of the herb rosemary. Although sold for use as an antioxidant, rosemary extracts have antimicrobial properties. As the test results in Table 3 show, the 2% OxiKan CLS in VLDPE resin reduced the microbe counts by 89%. In conjunction with the primary antimicrobials, the reductions significantly increased to >99% for 3 of the 4 samples. Looking at the data in Table 4, in which the OxiKan CLS film is set as the "control", the samples containing the 4 primary antimicrobials showed that 3 out of the 4 were significantly improved with >90% higher reductions over either material alone. This indicates a synergistic effect.

**Tests 4 and 5:** The 4 antimicrobial materials were each compounded into VLDPE resin at 10 wt% with 2 wt% added Cleanatis M1 or M2. These powdered materials are sold commercially as direct food antioxidant additives and are comprised of "deodorized and decolorized" extracts of the herb rosemary plus citrus extracts. However, these samples had much more color and odor than the Kancor material used in test 3. As can be seen by the data in Table 4, the M1 material alone, reduced the microbial count by 87% and the M2 material by 99.9%. Combinations with the 4 primary antimicrobials also showed enhanced performance, above and beyond the performance of each material alone.

**Table 5**

| **Percent Reduction in Microbes of Test Samples at Day 5 versus the "Additive Controls"** | | | | | |
|---|---|---|---|---|---|
| **Primary Antimicrobial** | **None** | **Amide wax** | **Secondary Antimicrobials** | | |
| | **Control** | **Erucamide** | **KANCOR** | **Cleanatis** | **Cleanatis** |
| | | | **CLS @ 2%** | **M1 @ 2%** | **M2 @2%** |
| | **Test 1** | **Test 2** | **Test 3** | **Test 4** | **Test 5** |
| VLDPE + Additive | | | | | |
| "Control" | | | | | |
| Optiform Ace S50 | 8.899 | 99.9871 | 90.8799 | 99.9705 | 92.0567 |
| Optiform Ace S61 | 42.456 | 99.999 | 99.9958 | 99.9826 | 95.7342 |
| Purasal S98 | 0 | 0 | 22.3735 | Growth | Growth |
| Purac Powder 60 | 0 | 56.3484 | 94.3766 | 77.09 | 29.21 |

Combinations with the 4 primary antimicrobials also showed enhanced performance, above and beyond the performance of each material alone. To show this, Table 5 shows results using Cleanatis/VLDPE film as the control instead of pure VLDPE film. To compare, the log CFU/g for control Cleanatis in VLDPE was subtracted from the reading on each test sample and converted to percent reduction. This data is reported in Table 5. As can be seen by the data in Table 5, for 2 of the samples containing the primary antimicrobials plus the Cleanatis additives, the antimicrobial performance surpasses that seen with either material alone, demonstrating a synergistic impact.

This written description uses examples to disclose the invention, including the best mode, and also to enable any person skilled in the art to practice the invention, including making and using any devices or systems and performing any incorporated methods.

## Claims

1. A multilayer film comprising a sealant layer, the sealant layer comprising:
a component selected from ethylene/alpha-olefin copolymer, olefin homopolymer, polyamide, polyester, ethylene/unsaturated ester copolymer, ionomer resin, and blends thereof; and
not more than 15 wt% of an antimicrobial blend; the antimicrobial blend comprising cis-13-docosenamide and at least one primary antimicrobial material.

2. The multilayer film of claim 1 wherein the at least one primary antimicrobial material is an antimicrobial salt and the amount of cis-13-docosenamide in the sealant layer is less than 10 wt%.

3. The multilayer film of claim 2 wherein the antimicrobial salt is selected from the group consisting of sodium acetate, sodium L-lactate, sodium diacetate, lactic acid on calcium L-lactate carrier and blends thereof.

4. The multilayer film of claim 3 wherein the antimicrobial salt in the antimicrobial blend comprises at least 25 wt% sodium acetate or at least 25 wt% sodium L-lactate.

5. The multilayer film of claim 3 wherein the antimicrobial salt in the antimicrobial blend comprising between 25 and 50 wt% sodium acetate and between 25 and 50 wt% sodium L-lactate.

6. The multilayer film of claim 3 wherein the antimicrobial salt comprises lactic acid on a calcium L-lactate carrier.

7. The multilayer film of claims 1-6 wherein the sealant layer comprises not more than 10 wt% of an antimicrobial blend.

8. The multilayer film of claims 1-7 wherein the antimicrobial blend further comprises 0.5 to 5 wt% of a blend of i) a lauryl arginine ester with ii) rosemary extracts, citrus extracts and blends thereof.

9. The multilayer film of claims 1-8 wherein the multilayer film exhibits a total free shrink of at least 10%, preferably at least 65%, at 85.0°C, as measured in accordance with ASTM D 2732.

10. A food package comprising:
a food product and a multilayer film according to claim 1.

11. The packaged food product of claim 10 wherein the food product is in direct contact with the sealant layer.

12. The packaged food product of claims 10 wherein the multilayer film is bag or wherein the packaged food product further comprises a tray, the food product being placed on the tray and the multilayer film overwrapped around the tray or sealed to a surface of the tray.

13. The packaged food product of claims 10-12 wherein the at least one primary antimicrobial material is selected from the group consisting of sodium acetate, sodium L-lactate, sodium diacetate, lactic acid on calcium L-lactate carrier and blends thereof; and the amount of cis-13-docosenamide in the sealant layer is less than 10 wt%.

14. A method of making a multilayer film comprising the steps of:
providing a component selected from ethylene/alpha-olefin copolymer, olefin homopolymer, polyamide, polyester, ethylene/unsaturated ester copolymer, ionomer resin, and blends thereof;
mixing the component with an antimicrobial blend to create a mixture;
extruding the mixture through a die to form a multilayer film;
wherein an outer layer of the multilayer film comprises the antimicrobial blend, the antimicrobial blend comprises cis-13-docosenamide and at least one primary antimicrobial material polymeric substrate in an amount of not more than 15 wt% of the exterior layer of the multilayer film.

15. A method of making a multilayer film comprising the steps of:
providing a multilayer film;
coating an exterior layer of the multilayer film with an antimicrobial blend;
curing the coating;
wherein the antimicrobial blend comprises cis-13-docosenamide and at least one primary antimicrobial material polymeric substrate in an amount of not more than 15 wt% of the exterior layer of the multilayer film.

## Patentansprüche

1. Mehrschichtfolie, die eine Siegelschicht umfasst, wobei die Siegelschicht
einen Bestandteil ausgewählt aus Ethylen/alpha-Olefin-Copolymer, Olefin-Homopolymer, Polyamid, Polyester, Ethylen/ungesättigter Ester-Copolymer, !onomerharz und deren Gemischen
und nicht mehr als 15 Gew.-% eines antimikrobiellen Gemisches umfasst; wobei das antimikrobielle Gemisch cis-13-Docosenamid und mindestens ein primäres antimikrobielles Material umfasst.

2. Mehrschichtfolie nach Anspruch 1, wobei das mindestens eine primäre antimikrobielle Material ein antimikrobielles Salz ist und die Menge an cis-13-Docosenamid in der Siegelschicht weniger als 10 Gew.-% beträgt.

3. Mehrschichtfolie nach Anspruch 2, wobei das antimikrobielle Salz ausgewählt ist aus der Gruppe bestehend aus Natriumacetat, Natrium-L-Lactat, Natriumdiacetat, Milchsäure auf Calcium-L-Lactat-Träger und Gemischen davon.

4. Mehrschichtfolie nach Anspruch 3, wobei das antimikrobielle Salz in dem antimikrobiellen Gemisch mindestens 25 Gew.-% Natriumacetat oder mindestens 25 Gew.-% Natrium-L-Lactat umfasst.

5. Mehrschichtfolie nach Anspruch 3, wobei das antimikrobielle Salz in dem antimikrobiellen Gemisch zwischen 25 und 50 Gew.-% Natriumacetat und zwischen 25 und 50 Gew.-% Natrium-L-Lactat umfasst.

6. Mehrschichtfolie nach Anspruch 3, wobei das antimikrobielle Salz Milchsäure auf einem Calcium-L-Lactat-Träger umfasst.

7. Mehrschichtfolie nach einem der Ansprüche 1-6, wobei die Siegelschicht nicht mehr als 10 Gew.-% eines antimikrobiellen Gemisches enthält.

8. Mehrschichtfolie nach einem der Ansprüche 1-7, wobei das antimikrobielle Gemisch ferner 0,5 bis 5 Gew.-% eines Gemisches aus i) einem Lauryl-Arginin-Ester mit ii) Rosmarinextrakten, Zitrusextrakten und Gemischen davon umfasst.

9. Mehrschichtfolie nach einem der Ansprüche 1-8, wobei die Mehrschichtfolie einen Gesamtschrumpf von mindestens 10 %, vorzugsweise mindestens 65 %, bei 85,0°C, gemessen nach ASTM D 2732, aufweist.

10. Lebensmittelverpackung, die
ein Lebensmittelprodukt und eine Mehrschichtfolie gemäß Anspruch 1 umfasst.

11. Verpacktes Lebensmittelprodukt gemäß Anspruch 10, wobei das Lebensmittelprodukt in direktem Kontakt mit der Siegelschicht steht.

12. Verpacktes Lebensmittelprodukt gemäß Anspruch 10, wobei die Mehrschichtfolie ein Beutel ist oder wobei das verpackte Lebensmittelprodukt außerdem eine Schale umfasst, wobei das Lebensmittelprodukt auf die Schale gelegt ist und die Mehrschichtfolie um die Schale gewickelt ist oder mit einer Oberfläche der Schale versiegelt ist.

13. Verpacktes Lebensmittelprodukt gemäß einem der Ansprüche 10-12, wobei das mindestens eine primäre antimikrobielle Material ausgewählt ist aus der Gruppe bestehend aus Natriumacetat, Natrium-L-Lactat, Natriumdiacetat, Milchsäure auf Calcium-L-Lactat-Träger und Gemischen davon, und die Menge an cis-13-Docosenamid in der Siegelschicht weniger als 10 Gew.-% beträgt.

14. Verfahren zur Herstellung einer Mehrschichtfolie, bei dem
ein Bestandteil bereitgestellt wird, der ausgewählt ist aus Ethylen/alpha-Olefin-Copolymer, Olefin-Homopolymer, Polyamid, Polyester, Ethylen/ungesättigtem Ester-Copolymer, Ionomerharz und deren Gemischen,
der Bestandteil mit einem antimikrobiellen Gemisch gemischt wird, um eine Mischung zu erzeugen,
die Mischung durch eine Düse extrudiert wird, um eine Mehrschichtfolie zu bilden,
wobei eine äußere Schicht der Mehrschichtfolie das antimikrobielle Gemisch umfasst, wobei das antimikrobielle Gemisch cis-13-Docosenamid und mindestens ein primäres antimikrobielles Material-Polymersubstrat in einer Menge von nicht mehr als 15 Gew.-% der Außenschicht der Mehrschichtfolie umfasst.

15. Verfahren zur Herstellung einer Mehrschichtfolie, bei dem
eine Mehrschichtfolie bereitgestellt wird,
eine Außenschicht der Mehrschichtfolie mit einem antimikrobiellen Gemisch beschichtet wird,
die Beschichtung ausgehärtet wird,
wobei das antimikrobielle Gemisch cis-13-Docosenamid und mindestens ein primäres antimikrobielles Material-Polymersubstrat in einer Menge von nicht mehr als 15 Gew.-% der äußeren Schicht der Mehrschichtfolie umfasst.

## Revendications

1. Film multicouche comprenant une couche de d'étanchéité, la couche d'étanchéité comprenant :
un composant choisi parmi un copolymère éthylène/alpha-oléfine, homopolymère d'oléfine, polyamide, polyester, copolymère éthylène/ester insaturé, résine ionomère, et des mélanges de ceux-ci ; et
pas plus de 15 % en poids d'un mélange antimicrobienne ; la mélange antimicrobien comprenant du cis-13-docosénamide et au moins un matériau antimicrobien primaire.

2. Film multicouche selon la revendication 1, dans lequel le au moins un matériau antimicrobien primaire est un sel antimicrobien et la quantité de cis-13-docosénamide dans la couche d'étanchéité est inférieure à 10 % en poids.

3. Film multicouche selon la revendication 2, dans lequel le sel antimicrobien est choisi parmi le groupe constitué d'acétate de sodium, L-lactate de sodium, diacétate de sodium, acide lactique sur support de L-lactate de calcium et des mélanges de ceux-ci.

4. Film multicouche selon la revendication 3, dans lequel le sel antimicrobien présent dans le mélange antimicrobien comprend au moins 25 % en poids d'acétate de sodium ou au moins 25 % en poids de L-lactate de sodium.

5. Film multicouche selon la revendication 3, dans lequel le sel antimicrobien dans le mélange antimicrobien comprend entre 25 et 50 % en poids d'acétate de sodium et entre 25 et 50 % en poids de L-lactate de sodium.

6. Film multicouche selon la revendication 3, dans lequel le sel antimicrobien comprend de l'acide lactique sur un support de L-lactate de calcium.

7. Film multicouche selon les revendications 1 à 6, dans lequel la couche d'étanchéité ne comprend pas plus de 10 % en poids d'un mélange antimicrobien.

8. Film multicouche selon les revendications 1 à 7, dans lequel le mélange antimicrobien comprend en outre 0,5 à 5 % en poids d'un mélange de i) un ester laurylique d'arginine avec ii) des extraits de romarin, des extraits d'agrume et des mélanges de ceux-ci.

9. Film multicouche selon les revendications 1 à 8, dans lequel le film multicouche présente un retrait libre total d'au moins 10 %, de préférence d'au moins 65 %, à 85,0°C, tel que mesuré conformément à la norme ASTM D 2732.

10. Emballage alimentaire comprenant :
un produit alimentaire et un film multicouche selon la revendication 1.

11. Produit alimentaire emballé selon la revendication 10, dans lequel le produit alimentaire est en contact direct avec la couche d'étanchéité.

12. Produit alimentaire emballé selon la revendication 10, dans lequel le film multicouche est un sac ou dans lequel le produit alimentaire emballé comprend en outre un plateau, le produit alimentaire étant placé sur le plateau et le film multicouche enroulé autour du plateau ou scellé sur une surface du plateau.

13. Produit alimentaire emballé selon les revendications 10 à 12, dans lequel le au moins un matériau antimicrobien primaire est choisi parmi le groupe constitué d'acétate de sodium, L-lactate de sodium, diacétate de sodium, acide lactique sur support de L-lactate de calcium et des mélanges de ceux-ci ; et la quantité de cis-13-docosénamide dans la couche d'étanchéité est inférieure à 10 % en poids.

14. Procédé de fabrication d'un film multicouche comprenant les étapes consistant à :
fournir un composant choisi parmi un copolymère éthylène/alpha-oléfine, homopolymère d'oléfine, polyamide, polyester, copolymère éthylène/ester insaturé, résine ionomère, et des mélanges de ceux-ci ;
mélanger le composant avec un mélange antimicrobien pour créer une combinaison ;
extruder la combinaison à travers une filière pour former un film multicouche ;
dans lequel une couche extérieure du film multicouche comprend le mélange antimicrobien, le mélange antimicrobien comprend du cis-13-docosénamide et au moins un substrat polymère de matériau antimicrobien primaire selon une quantité ne dépassant pas 15 % en poids de la couche extérieure du film multicouche.

15. Procédé de fabrication d'un film multicouche comprenant les étapes consistant à :
fournir un film multicouche ;
revêtir une couche extérieure du film multicouche avec un mélange antimicrobien ;
durcir le revêtement ;
dans lequel le mélange antimicrobien comprend du cis-13-docosénamide et au moins un substrat polymère de matériau antimicrobien primaire selon une quantité ne dépassant pas 15 % en poids de la couche extérieure du film multicouche.
